(19) Europäisches Patentamt / European Patent Office / Office européen des brevets

(11) **EP 2 900 771 B1**

(12) # EUROPÄISCHE PATENTSCHRIFT

(45) Veröffentlichungstag und Bekanntmachung des Hinweises auf die Patenterteilung:
**30.11.2016 Patentblatt 2016/48**

(21) Anmeldenummer: **13766382.9**

(22) Anmeldetag: **26.09.2013**

(51) Int Cl.:
*C09D 5/08* *(2006.01)*  *C25D 11/18* *(2006.01)*
*C25D 11/24* *(2006.01)*  *C23C 22/83* *(2006.01)*

(86) Internationale Anmeldenummer:
**PCT/EP2013/070119**

(87) Internationale Veröffentlichungsnummer:
**WO 2014/049081 (03.04.2014 Gazette 2014/14)**

(54) **VERWENDUNG EINES POLYMEREN KORROSIONSINHIBITORS ZUR BEHANDLUNG VON ANODISIERTEN METALLOBERFLÄCHEN**

USE OF A POLYMERIC CORROSION INHIBITOR FOR TREATMENT OF ANODIZED METAL SURFACES

UTILISATION D'UN INHIBITEUR DE CORROSION POLYMÈRE POUR TRAITER DES SURFACES MÉTALLIQUES ANODISÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2012 DE 102012217693**

(43) Veröffentlichungstag der Anmeldung:
**05.08.2015 Patentblatt 2015/32**

(73) Patentinhaber: **Fraunhofer-Gesellschaft zur Förderung der angewandten Forschung e.V. 80686 München (DE)**

(72) Erfinder:
- **NOESKE, Michael**
  **28359 Bremen (DE)**
- **BUCHBACH, Sascha**
  **28359 Bremen (DE)**
- **LEITE CAVALCANTI, Welchy**
  **28359 Bremen (DE)**
- **BURCHARDT, Malte**
  **28359 Bremen (DE)**
- **BRINKMANN, Andreas**
  **28359 Bremen (DE)**
- **DIECKHOFF, Stefan**
  **28359 Bremen (DE)**
- **STRAETMANS, Felix**
  **22143 Hamburg (DE)**
- **SOLTAU, Marko**
  **22147 Hamburg (DE)**

(74) Vertreter: **Glawe, Delfs, Moll Partnerschaft mbB von Patent- und Rechtsanwälten Postfach 13 03 91 20103 Hamburg (DE)**

(56) Entgegenhaltungen:
EP-A1- 2 505 690    EP-A2- 0 150 706
BE-A1- 807 939    DE-A1-102007 044 159
FR-E- 75 182    US-A- 3 961 111

EP 2 900 771 B1

**Beschreibung**

Die Erfindung betrifft das Gebiet des Korrosionsschutzes für Metalle, insbesondere die Verwendung eines polymeren Korrosionsinhibitors bzw. einer Mischung, die mindestens einen polymeren Korrosionsinhibitor enthält, zur Behandlung von Metalloberflächen sowie ein entsprechendes Verfahren zur Behandlung von Metalloberflächen.

Die Korrosion an metallischen Bauteilen ist ein erhebliches Problem und kann zur Beeinträchtigung der Funktionalität des Bauteils führen. Besonderes Augenmerk findet der Korrosionsschutz von sogenannten Ventilmetallen wie Aluminium, Titan und Vanadium sowie deren Legierungen aufgrund der weiten Verbreitung von in der Luftfahrt- und teilweise auch in der Autoindustrie. Zur Hemmung bzw. Verhinderung von Korrosion ist es bekannt, die Metalloberfläche mit einer korrosionsinhibierenden Schutzschicht zu überziehen. Ein besonders effektiver Korrosionsschutz für viele Metalle, insbesondere Aluminium, wurde lange durch eine Beschichtung mit Chromat erreicht. Chromate sind in der Regel giftig, Chrom(VI) gilt als krebserzeugend. Die Verwendung von Chrom(VI) als Korrosionsinhibitor ist deshalb mittlerweile verboten. Ersatzformulierungen (z. B. Chrom(III), Zinkphosphat, andere anorganische Korrosionsschutzpigmente etc.) zeigen zumeist nicht die guten korrosionsinhibierenden Eigenschaften von Chrom(VI) und/oder sind teilweise metallspezifisch, so dass ein breiter Multimetallschutz nicht erreicht werden kann. Auch begegnen einige Korrosionsinhibitoren im Stand der Technik gesundheitlichen und/oder ökologischen Bedenken. Es besteht somit ein Bedarf an alternativen Formulierungen, die einen effektiven Korrosionsschutz bieten.

Organische Korrosionsinhibitoren sind Chemikalien, die auf Metalloberflächen stark und teilweise spezifisch adsorbieren und teilweise sogar nach chemischer Reaktion anbinden können. Sie können zu einer gewissen Versiegelung führen und so eine Barrierewirkung aufbauen oder auch anodische oder kathodische Korrosionsreaktionen hemmen. Diese Korrosionsinhibitoren liegen meist in Form schwacher Säuren und ihrer Derivate vor, die auf der Metalloberfläche unlösliche Salze bilden.

Die meisten organischen Inhibitoren sind relativ kleine Moleküle, die auf der Metalloberfläche meist dicke unorganisierte Schichten ausbilden, bei denen der Schutzmechanismus auf Physisorption beruht. Nachteilig daran ist, dass diese Schichten leicht abrasiv ablösbar sind oder ausschließlich durch ihre Wasserunlöslichkeit wirken. Im letzteren Fall müssen die Korrosionsinhibitoren mit Lösungsmittel appliziert werden.

Organische Korrosionsinhibitoren sind von konventionellen organischen Farb- bzw. Lackschutzschichten zu unterscheiden. Letztere weisen zumeist nur eine unzureichende Barrierewirkung gegenüber korrosionsfördernden Stoffen auf. Aus diesem Grund werden konventionelle Farb- bzw. Lackschichten ganz überwiegend nicht direkt auf die Metalloberfläche aufgetragen, sondern zumeist auf eine in der Regel korrosionsinhibierende Substanzen enthaltende Grundierung oder Primerschicht. Bei der Primerschicht kann es sich um eine Lackschichthandeln, die Korrosionsinhibitoren als Additive enthält.

Ferner ist die Verwendung von leitfähigen Polymeren als Korrosionsschutzmittel bekannt. Nachteilig an leitfähigen Polymeren ist, dass Beschichtungen meist nur sehr aufwändig (z. B. mittels Elektropolymerisation) auf das Substrat aufbringbar sind.

FR 75.182 E offenbart, Bauteile aus Aluminium mit Polyamid-haltiger Lösung in Kontakt zu bringen und die BE 807 939 A1 offenbart, Bauteile aus Aluminium mit Polyimid-haltiger Lösung in Kontakt zu bringen. Der erfindungsgemäß verwendete polymeren Korrosionsinhibitor unterscheidet sich von den Polyamiden und Polyimiden des Standes der Technik und weist vorteilhafte Eigenschaften auf, welche im Stand der Technik nirgends erwähnt werden (vergleiche insbesondere Beispiel 1 bis 5).

Es ist die Aufgabe der vorliegenden Erfindung, einen Korrosionsschutz für die eingangs genannte anodisierte metallische Substrate bereitzustellen, der eine gute korrosionsinhibierende Wirkung zeigt und einfach zu applizieren ist.

Gelöst wird diese Aufgabe durch den Gegenstand der unabhängigen Ansprüche. Vorteilhafte Weiterbildungen sind in den abhängigen Ansprüchen genannt.

Die Erfindung hat erkannt, dass ein erfindungsgemäßer Korrosioninhibitor bzw. eine Mischung, die mindestens einen polymeren Korrosionsinhibitor enthält, auf Metalloberflächen eine dünne, langzeitstabile Polymerschicht ausbildet, die eine gute korrosionsinhibierende Wirkung zeigt.

Zunächst seien einige im Rahmen der Erfindung verwendete Begriffe erläutert.

Der Begriff Korrosionsinhibitor bezeichnet eine Substanz, die die Korrosion von Metallen verlangsamen, hemmen oder verhindern kann.

Ein polymerer Korrosionsinhibitor weist wenigstens ein polymeres Grundgerüst auf, das wenigstens zwei miteinander verknüpfte Monomereinheiten aufweist. Hierbei kann es sich um die gleichen Monomereinheiten (Homopolymer), z. B. Propoxy-Einheiten, oder um ungleiche Monomereinheiten (CoPolymer), z. B. Ethoxy-, Propoxy oder Butoxy-Einheiten, handeln.

Die Begriffe "Polymer", "Monomereinheit" und "Monomer" sind im Rahmen der Erfindung wie in der REACH-Verordnung (EG) Nr. 1907/2006 veröffentlicht am 30.12.2006 im Amtsblatt der Europäischen Union Nr. 396 S. 54 definiert.

Ein erfindungsgemäß verwendeter polymerer Korrosionsinhibitor kann bis zu sechs polymere Grundgerüste aufweisen, die über eine Brückenstruktureinheit miteinander verknüpft sind. Im Rahmen der Erfindung bezeichnet der Begriff Brückenstruktureinheit ein nichtpolymeres organisches Strukturelement, mit dem das wenigstens eine polymere Grundgerüst verknüpft ist. Der Ausgangspunkt für die Brückenstruktureinheit kann ein Startermolekül für die Polymerisation, beispielsweise ein Alkohol oder Polyol wie z. B. Glycerin oder Dipentaerithrol, sein, wobei die Brückenstruktureinheit nicht zwangsläufig als ehemaliges Startermolekül identifizierbar sein muss. Die Brückenstruktureinheit kann auch ein C-Atom sein, mit dem das wenigstens eine polymere Grundgerüst verknüpft ist.

Ein erfindungsgemäß verwendeter polymerer Korrosionsinhibitor weist die folgende Formel auf:

$$(R^1)_a A(R^2 X)_b$$

wobei

$$a = 0 - 3,$$

$$b = 1 - 5,$$

A eine Brückenstruktureinheit ist,

$R^1$ gleich oder verschieden H oder ein aliphatischer, aromatischer, olefinischer, cyclischer, heterocyclischer, polycyclischer oder polyheterocyclischer Rest ist,

$R^2$ gleich oder verschieden ein polymeres Grundgerüst ist, wobei das polymere Grundgerüst $R^2$ Ethoxy- (EO), Propoxy-(PO), Butoxy- (BO), -Einheiten oder Mischungen dieser Einheiten aufweist,

X gleich oder verschieden eine funktionelle Gruppe ist ausgewählt aus der Gruppe bestehend aus Amiden und Imiden von Carbonsäuren, Dicarbonsäuren und Polycarbonsäuren,

die Molmasse des Polymers zwischen 200 und 10.000, vorzugsweise 400 und 6.000 liegt.

Bei den angegebenen Molmassen handelt es sich, wie bei Polymeren üblich, um mittlere Molmassen.

Im Rahmen der Definition des Begriffs Polymers kann ein polymerer Korrosionsinhibitor Nebenprodukte wie beispielsweise Restmengen an Katalysator oder nicht reagierte Monomere enthalten. Die Erfindung hat erkannt, dass diese Nebenprodukte die Wirkung des polymeren Korrosionsinhibitors nicht negativ beeinflussen.

Dieses Polymer bzw. eine Mischung, die mindestens ein solches Polymer enthält, wird erfindungsgemäß verwendet als Korrosionsinhibitor für die Oberfläche von anodisierten Metallen ausgewählt aus der Gruppe bestehend aus Aluminium, Titan, Vanadium sowie Legierungen der vorgenannten Metalle. Es handelt sich hier sämtlich um Ventilmetalle bzw. deren Legierungen, auf deren Oberfläche durch Anodisation bereits eine Oxidschicht hergestellt worden ist.

Die Erfindung hat erkannt, dass überraschenderweise diese Polymere auf der durch Anodisation entstandenen porösen Oxidschicht eine außerordentlich gute korrosionsinhibierende Wirkung entfalten, der Korrosionsschutz kann erfindungsgemäß gegenüber einem Korrosionsschutz lediglich durch Anodisation beispielsweise um den Faktor 10 oder mehr verbessert werden, wie unten noch darzulegen sein wird.

Ein den Schutzbereich nicht beschränkender und die Anmelderinnen nicht bindender Erklärungsversuch für diese überraschende Wirkung besteht darin, dass möglicherweise das Polymer auf der porösen Oxidoberfläche keine kontinuierliche Schutzschicht bilden kann, sondern in den Porenhohlräumen Depots von möglicherweise flüssigem Polymer gebildet werden. Kommt es zu einer Beschädigung der durch Anodisation entstandenen Oxidschicht, wandert der Korrosionsinhibitor aus diesen Depots zu der durch die Beschädigung freigelegten Metalloberfläche und wird dort durch die funktionellen Gruppen X (siehe Anspruch 1) chemisorbiert.

Es ist somit insbesondere überraschend, dass ein Polymer, das seine korrosionsinhibierende Wirkung eigentlich durch Chemisorption an einer reinen Metalloberfläche entfalten soll, eine siginifikante korrosionsinhibierende Wirkung auf der völlig anders aufgebauten Oxidschicht von anodisierten Ventilmetallen entfalten kann.

In einer bevorzugten Ausführungsform ist das polymere Grundgerüst $R^2$ ein Homopolymer von Ethoxy-Einheiten, ein Co-Polymer auf Basis einer Mischung von Ethoxy- und Propoxy-Einheiten, oder ein Homopolymer von Propoxy-Einheiten.

Vorzugsweise umfasst das Grundgerüst $R^2$ 3 bis 200, besonders bevorzugt 5 bis 100 Monomereinheiten. Das polymere Grundgerüst kann verzweigt sein, vörteilhafterweise handelt es sich jedoch um ein lineares Grundgerüst.

Bei den im Rahmen der erfindungsgemäßen Verwendung korrosionsgeschützten Metallen handelt es sich bevorzugt um anodisierte Aluminium- und Titanlegierungen, weiter vorzugsweise anodisierte Legierungen ausgewählt aus der Gruppe bestehend aus AA 2024, AW 5005, AW 5052, AAW 5754, AW 6006, AW 6060, AW 7020, AW7075, AW7475, AW2024, Al 3.3541, Al 3.3241, Al 3.3561, Al 3.3261, TiAl6V4, Ti-Zr-Nb-Legierungen wie Ti-28Zr-8Nb, NiTi-Legierungen wie SM495 und SE 508.

Gegenstand der Erfindung ist ferner ein Verfahren zur Behandlung der Oberfläche von Metallen ausgewählt aus der Gruppe bestehend aus Aluminium, Titan, Vanadium sowie Legierungen der vorgenannten Metalle, mit den Schritten:

- Anodisieren der Metalloberfläche;

- Inkontaktbringen der anodisierten Metalloberfläche mit einem polymeren Korrosionsinhibitor der Formel

$$(R^1)_a A(R^2 X)_b$$

wobei

$$a = 0 - 3,$$

$$b = 1 - 5,$$

A eine Brückenstruktureinheit ist,

$R^1$ gleich oder verschieden H oder ein aliphatischer, aromatischer, olefinischer, cyclischer, heterocyclischer, polycyclischer oder polyheterocyclischer Rest ist,

$R^2$ gleich oder verschieden ein polymeres Grundgerüst ist, wobei das polymere Grundgerüst Ethoxy- (EO), Propoxy- (PO), Butoxy-(BO), -Einheiten oder Mischungen dieser Einheiten aufweist,

X gleich oder verschieden eine funktionelle Gruppe ist ausgewählt aus der Gruppe bestehend aus Amiden und Imiden von Carbonsäuren, Dicarbonsäuren und Polycarbonsäuren,

die Molmasse des Polymers zwischen 200 und 10.000, vorzugsweise 400 und 6.000 liegt.

Im Rahmen des erfindungsgemäßen Verfahrens sind der verwendete Korrosionsinhibitor bzw. eine Mischung, die mindestens einen solchen polymeren Korrosionsinhibitor enthält, sowie die damit versehenen anodisierten Metalle bevorzugt so ausgestaltet bzw. ausgewählt wie vorstehend im Rahmen der erfindungsgemäßen Verwendung beschrieben.

Das im Rahmen des erfindungsgemäßen Verfahrens durchgeführte Anodisieren kann bevorzugt ausgeführt werden als Schwefelsäure-Anodiseren, Chromsäure-Anodisieren und Weinsäure-Schwefelsäure-Anodisieren.

Das Schwefelsäure-Anodisieren (SAA, auch GS-Anodisieren genannt) wird z.B. mit ca. 20 Vol.-% Schwefelsäure bei ca. 20 °C und bei ca. 20 V Gleichspannung betrieben. Das Chromsäure-Anosisieren (CAA, Bengough-Stuart Prozess) wird z.B. mit 30-100 g/l Chromsäure bei ca. 40 °C und bei 40 bis 50 V Gleichspannung betrieben. Das erfindungsgemäß bevorzugte Weinsäure-Schwefelsäure-Anodisieren (TSA) wird z.B. mit 80 g/l Weinsäure und 40 g/l Schwefelsäure bei ca. 37°C und bei ca. 14 V für 25 min betrieben (vgl. DIN EN 4704:2012-05).

Die im Rahmen des erfindungsgemäßen Verfahrens durch Anodisieren hergestellte Schicht (Oxidschicht) weist bevorzugt eine mittlere Dicke von etwa 1 bis 3 $\mu$m, insbesondere etwa 2 $\mu$m auf. Bevorzugt weisen die Poren der durch Anodisieren hergestellten Schicht einen mittleren, mittels Transmissionselektronenmikroskopie an Schnitten senkrecht zur Oberfläche der anodisierten Oxidschicht ermittelten Durchmesser von 2 bis 200 nm, weiter vorzugsweise 2 bis 50 nm, weiter vorzugsweise etwa 5 bis 20 nm auf.

Erfindungsgemäß ist es bevorzugt, dass der polymere Korrosionsinhibitor bzw. eine Mischung, die mindestens einen solchen polymeren Korrosionsinhibitor enthält, aus einem Zweiphasengemisch (Dispersion bzw. Emulsion) heraus appliziert wird, vorzugsweise einer wässrigen Dispersion. Bevorzugt kann ein Dispergierhilfsmittel zugegen sein, dabei kann es sich beispielsweise um Tenside oder bevorzugt um Alkanolamine wie insbesondere Triethanolamin handeln. Die Konzentration des polymeren Korrosionsinhibitors in der bevorzugt wässrigen Dispersion beträgt vorzugsweise 0,01 bis 2 Gew.-%, weiter vorzugsweise 0,05 bis 0,5 Gew.-%.

Bei Verwendung eines Dispergierhilfsmittels wie insbesondere Triethanolamin kann das Gewichtsverhältnis von polymeren Korisionsinhibitor zu Dispergierhilfsmittel in der Dispersion bevorzugt zwischen 3:1 und 5:1, insbesondere bei etwa 4:1 liegen.

Erfindungsgemäß ist es alternativ möglich, den polymeren Korrosionsinhibitor bzw. eine Mischung, die mindestens einen solchen polymeren Korrosionsinhibitor enthält, aus einer Lösung heraus zu applizieren. Es können geeignete organische Lösungsmittel, beispielsweise polare Lösungsmittel, insbesondere Alkohole, wie Isopropanol, oder apolare organische Lösungsmittel wie beispielsweise Petrolether, Xylol oder insbesondere Petrolether/Xylol-Gemische verwendet werden. Die Konzentration des Korrosionsinhibitors in der Lösung beträgt bevorzugt 0,01 bis 10 Gew.-%, weiter vorzugsweise 0,05 bis 2 Gew.-%, weiter vorzugsweise 0,5 bis 2 Gew.-%.

Das Aufbringen des Korrosionsinhibitors bzw. eine Mischung, die mindestens einen solchen polymeren Korrosionsinhibitor enthält, auf die anodisierte Metalloberfläche kann erfindungsgemäß bevorzugt geschehen durch Eintauchen, der Gasraum über der Lösung oder Dispersion steht bevorzugt unter vermindertem Druck, um eine Entweichen von Gas aus den Poren der anodisierten Oxidschicht zu erleichtern. Der Zeitraum des Inkontaktbringens (Eintauchens) kann bevorzugt 10 min bis 6 h, weiter vorzugsweise 1 bis 3 h betragen.

Gegenstand der Erfindung ist ferner ein Metallwerkstück, erhältlich durch das erfindungsgemäße Verfahren. Ein solches Metallwerkstück zeichnet sich gegenüber dem Stand der Technik dadurch aus, dass der erfindungsgemäß verwendete polymere Korrosionsinhibitor bzw. ein Gemisch, das mindestens einen solchen polymeren Korrosionsinhibitor enthält, in den Poren einer anodisierten Oxidschicht zugegen ist und einen wirksamen Korrosionsschutz auch und gerade bei oder nach einer Verletzung dieser Oxidschicht durch mechanische Einwirkung bietet.

Der erfindungsgemäße verwendete polymere Korrosionsinhibitor bzw. eine Mischung, die mindestens einen solchen polymeren Korrosionsinhibitor enthält, kann nicht vollständig durchreagierte bzw. nicht vollständig umgesetzte funktionelle Gruppen am polymeren Grundgerüst aufweisen. Die Erfindung hat erkannt, dass die Wirkung des polymeren Korrosionsinhibitors dadurch nicht negativ beeinflusst wird.

Die Erfindung wird nachstehend anhand von Ausführungsbeispielen erläutert. Zunächst werden verschiedene Mess- und Prüfverfahren erläutert, anschließend folgen Beispiele und Vergleichsbeispiele.

In den Figuren zeigen:

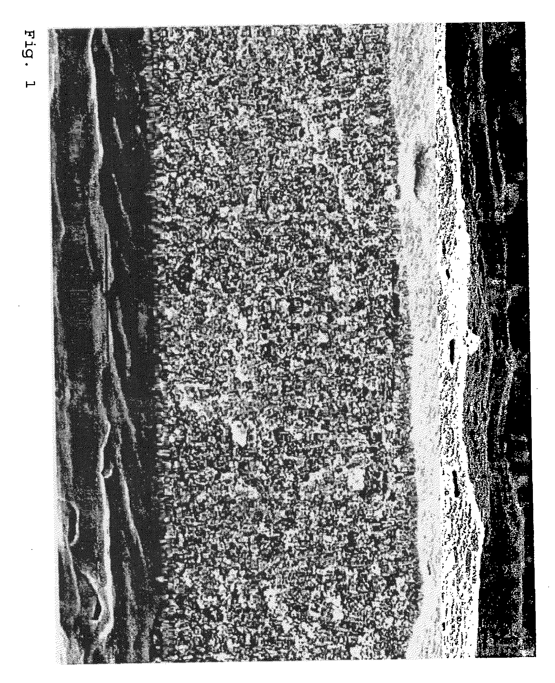

Fig. 1    Rasterelektronenmikroskopische Aufnahme einer Bruchkante (nach oben ist die Oberfläche gerichtet, nach unten das Basismaterial) einer mittels Weinsäure-Schwefelsäure-Anodisieren hergestellten Oxidschicht (unverdichtet) auf AA2024 unplattiert;

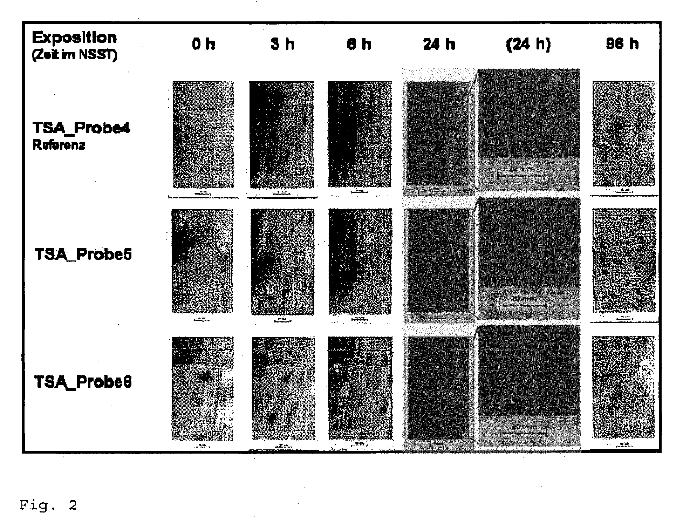

Fig. 2:    Photographische Aufnahmen von den Oberflächen von mit einer PKI enthaltenden Korrosionsinhibitorschicht belegten anodisierten Aluminium AA2024-Blechen (aus isopropanolischer (i-PrOH) Lösung belegtes TSA_Blech5 und aus wässriger Lösung mit TEA-Zusatz belegtes TSA_Blech6) im Vergleich zu einer nicht mit PKI belegten Referenz (TSA_Blech4) nach unterschiedlich langer Lagerung im Salzsprühtest NSS-Test

### I. Schichtdicke

Die Dicke der auf der Metalloberfläche angeordneten Polymerschicht wird mittels Röntgenphotoelektronenspektroskopie (XPS) bestimmt. Diese Methode erlaubt zudem Rückschlüsse auf die atomare Zusammensetzung der Schicht.

### II. Korrosionstests - Salzsprühtest

Salzsprühtests wurde in einer Salzsprühkammer (Hersteller Liebisch GmbH) entsprechend DIN EN ISO 9227 als NSS (neutral salt spray) durchgeführt.

### III. Beispiele und Vergleichsbeispiele

Die Erfindung wird nachfolgend anhand von Beispielen erläutert.

### Beispiel 1

### Polymerer Korrosionsinhibitor:

Ein Polymer mit einem mittleren Molekulargewicht von ca. 6000 der Formel

$$(R^1)_a A(R^2 Y)_b$$

wobei

A = -CH$_2$-CH-CH$_2$-,

a = 0,
b = 3,
Y eine NH$_2$-Gruppe,
das polymere Grundgerüst R$^2$ ein Homopolymer von Propoxy-Einheiten ist,

wird mit einer equifunktionalen Menge Polymaleinsäureanhydrid amidiert. Diese Polyamidocarbonsäure PAC wird mit Amin, vorzugsweise Triethanolamin (TEA), neutralisiert. Der so erhaltene polymere Korrosionsinhibitor wird nachfolgend als PKI bezeichnet.

**Beispiel 2**

Bleche der Aluminiumlegierung AA 2024 wurden wie folgt anodisiert:

Weinsäure-Schwefelsäure-Anodisation (TSA) mit 80 g/l Weinsäure und 40 g/l Schwefelsäure bei 37°C und 14 V für 25 min.

Die Schichtdicke der Oxidschicht beträgt ca. 2 μm. Eine rasterelektronenmikroskopische Aufnahme dieser Schichten ist in Figur 1 dargestellt. Die Porendurchmesser sind in einer oberflächennahen, äußeren Schicht geringer als im Inneren der Schicht. Die Durchmesser liegen typischerweise im Bereich zwischen 2 nm und 200 nm, oberflächennah typischerweise im Bereich zwischen 2 nm und 50 nm, im engeren Sinne zwischen 5 nm und 20 nm.

**Beispiel 3**

In diesem Beispiel wurde auf anodisierte Bleche des Beispiels 2 durch Eintauchen in Lösungen und Dispersionen von PKI unterschiedlicher Konzentration der Korrosionsinhibitor auf die anodisierte Oxidschicht aufgebracht. Die Oberflächenbeladungen wurden anschließend mittels XPS bestimmt. Höhere C-Konzentrationen zeigen eine Beladung mit dem organischen PKI an.
Die anodisierten AA 2024-Bleche wurden gebeizt und die Oberfläche luftgetrocknet. Anschließend erfolgte ein Eintauchen in die jeweilge PKI-Lösung/Dispersion bei Raumtemperatur für 2 h bei Unterdruck im Gasraum über der Flüssigphase.

**Tabelle 1:** XPS-Untersuchungsergebnisse der Oberflächenbeladungen von gebeizten AA2024-Blechen nach Immersion in wässrigen PKI-Dispersionen. Die PKI-Konzentrationen sind in Gewichts-% angegeben. Eine visuell erkennbare Trübung der Dispersionen bzw. eine nach dem Vermischen mittels Rühren eintretende Ausbildung einer ölig erscheinenden, aufschwimmenden zweiten Phase ist durch die Kennzeichnung "t" angemerkt. Elementkonzentrationen sind in at% angegeben. Die mittels Lichtstreuung ermittelte durchschnittliche Größe $d_D$ von über 50 nm großen Tröpfchen ist in μm angegeben, falls die Lichtstreuintensität bei der Messung ausreichend war.

| aq. PKID | $d_D$ | Cu | Fe | F | O | N | K | Ca | C | S | Cl | P | Al |
|---|---|---|---|---|---|---|---|---|---|---|---|---|---|
| 0,5 %[t] | 0,23 | 0,2 | 1,0 | 2,2 | 34,8 | 0,5 | - | - | 37,5 | 0,2 | - | 2,1 | 21,4 |
| 0,15 % | 1,02 | 0,3 | 1,1 | 2,6 | 36,4 | 0,6 | - | - | 33,7 | 0,1 | - | 2,2 | 22,9 |
| 0,05 % | 1,87 | 0,4 | 0,9 | 2,9 | 40,0 | 0,5 | - | - | 26,1 | 0,1 | - | 2,9 | 26,0 |
| 0,014 % | 0,9 | 0,3 | 1,1 | 2,1 | 42,1 | 0,5 | - | 0,2 | 27,0 | 0,1 | - | 3,2 | 23,4 |
| 0,0042 % | | 0,4 | 0,9 | 2,8 | 39,9 | 0,3 | - | - | 27,2 | - | - | 2,3 | 26,0 |
| 0,0013 % | | 0,5 | 1,1 | 3,2 | 42,9 | 0,3 | - | 0,2 | 20,7 | 0,2 | - | 2,6 | 28,2 |
| 0,00039 % | | 0,5 | 1,1 | 3,2 | 43,8 | 0,3 | - | 0,2 | 19,5 | 0,2 | - | 2,6 | 28,6 |

Tabelle 2: XPS-Untersuchungsergebnisse der Oberflächenbeladungen von gebeizten AA2024-Blechen nach Immersion in wässrigen PKI-Dispersionen mit Zusatz von TEA Triethanolamin) im Gewichtsverhältnis 4:1. Die PKI-Konzentrationen sind in Gewichts-% angegeben. Eine visuell erkennbare Trübung der Dispersionen bzw. eine nach dem Vermischen mittels Rühren eintretende Ausbildung einer ölig erscheinenden, aufschwimmenden zweiten Phase ist durch die Kennzeichnung "t" angemerkt. Elementkonzentrationen sind in at% angegeben.

| aq. PKI + TEA | Na | Cu | Fe | F | O | N | K | Ca | C | S | Cl | P | Al |
|---|---|---|---|---|---|---|---|---|---|---|---|---|---|
| 0,40 % | - | 0,1 | 0,3 | 0,4 | 26,0 | 1,6 | - | - | 62,9 | - | - | 0,4 | 7,7 |
| 0,11 % | - | 0,2 | 0,5 | 1,2 | 32,6 | 1,2 | - | 0,1 | 47,7 | - | - | 1,1 | 15,4 |
| 0,033 % | - | 0,4 | 0,4 | 1,9 | 34,4 | 1,2 | - | 0,1 | 39,2 | 0,1 | - | 1,2 | 21,2 |
| 0,010 % | - | 0,3 | 0,3 | 1,9 | 37,2 | 0,8 | - | 0,1 | 36,5 | - | - | 1,3 | 21,4 |
| 0,031 % | - | 0,5 | 0,2 | 2,9 | 39,6 | 0,6 | - | 0,1 | 25,7 | - | - | 0,3 | 28,5 |

Tabelle 3: XPS-Untersuchungsergebnisse der Oberflächenbeladungen von gebeizten AA2024-Blechen nach Immersion in isopropanolischen PKI-Dispersionen. Die PKI-Konzentrationen sind in Gewichts-% angegeben. Eine visuell erkennbare Trübung der Dispersionen bzw. eine nach dem Vermischen mittels Rühren eintretende Ausbildung einer ölig erscheinenden, aufschwimmenden zweiten Phase ist durch die Kennzeichnung "t" angemerkt. Elementkonzentrationen sind in at% angegeben.

| PKI i-PrOH | Na | Cu | Fe | F | O | N | K | Ca | C | S | Cl | P | Al |
|---|---|---|---|---|---|---|---|---|---|---|---|---|---|
| 6 %[t] | - | - | - | - | 21,2 | 1,2 | - | - | 77,6 | - | - | - | 0,1 |
| 2 %[t] | - | - | - | - | 21,6 | 1,2 | - | - | 77,0 | - | - | - | 0,2 |
| 0,5 % | - | - | - | - | 24,5 | 1,7 | - | - | 68,1 | - | - | 0,2 | 4,9 |
| 0,15 % | 0,1 | 0,3 | 1,0 | 2,6 | 35,0 | 1,4 | - | 0,1 | 38,4 | 0,2 | - | 1,3 | 19,5 |
| 0,05 % | 0,1 | 0,5 | 0,6 | 3,6 | 37,4 | 1,0 | - | - | 30,6 | - | - | 2,0 | 24,1 |
| 0,014 % | - | 0,5 | 0,7 | 3,9 | 39,2 | 0,6 | - | 0,3 | 27,4 | 0,2 | - | 1,6 | 25,5 |
| 0,0042 % | 0,1 | 0,5 | 0,8 | 4,1 | 38,6 | 0,7 | - | 0,2 | 27,8 | 0,2 | - | 1,8 | 25,2 |
| 0,0013 % | 0,1 | 0,6 | 0,6 | 4,5 | 39,2 | 0,6 | - | 0,3 | 24,5 | 0,3 | - | 1,9 | 27,4 |

Tabelle 4: XPS-Untersuchungsergebnisse der Oberflächenbeladungen von gebeizten AA2024-Blechen nach Immersion in PKI-Dispersionen in Petrolether/Xylol-Gemischen (PE/X). Die PKI-Konzentrationen sind in Gewichts-% angegeben. Elementkonzentrationen sind in at% angegeben.

| PKI PE/X | Na | Cu | Fe | F | O | N | K | Ca | C | S | Cl | P | Al |
|---|---|---|---|---|---|---|---|---|---|---|---|---|---|
| 2 % | - | - | - | - | 21,5 | 1,1 | - | - | 76,9 | - | - | - | 0,4 |
| 0,5 % | - | - | - | 0,3 | 22,9 | 1,2 | - | - | 72,8 | - | - | - | 2,8 |
| 0,15 % | - | 0,1 | - | 0,8 | 26,1 | 1,7 | - | - | 65,4 | 0,9 | - | - | 5,0 |
| 0,05 % | - | 0,2 | - | 1,7 | 29,1 | 1,1 | - | - | 53,8 | 0,4 | - | - | 13,8 |
| 0,014 % | - | 0,6 | - | 4,0 | 33,9 | 0,6 | - | - | 34,8 | 0,4 | - | - | 25,8 |
| 0,0042 % | - | 0,6 | - | 9,8 | 33,6 | 0,9 | - | - | 26,5 | 0,6 | - | - | 28,1 |

(fortgesetzt)

| PKI PE/X | Na | Cu | Fe | F | O | N | K | Ca | C | S | Cl | P | Al |
|---|---|---|---|---|---|---|---|---|---|---|---|---|---|
| 0,0013 % | 0,7 | 0,7 | - | 5,1 | 35,8 | 0,5 | - | - | 28,8 | 0,9 | - | - | 27,4 |
| 0,00039 % | - | 0,5 | - | 4,8 | 36,9 | 0,7 | - | - | 30,8 | 1,1 | - | - | 25,2 |

Man erkennt, dass sich PKI aus wässriger Dispersion insbesondere unter Zuhilfenahme des Dispergierhilfsmittels TEA gut aufbringen lässt. Ebenfalls gut möglich ist ein Aufbringen aus organischen Lösungsmitteln.

**Beispiel 4**

Von drei Blechen des Beispiels 2 blieb eines als Vergleichsbeispiel unverändert (TSA_Probe4), eines wurde wie in Beispiel 3 angegeben aus einer isopropanolischen Lösung von 0,2 Gew.-% PKI mit dem Korrosionsinhibitor belegt (TSA_Probe5), das dritte aus einer 0,5 Gew.-% PKI + TEA-Lösung mit PKI belegt (TSA_Probe6).
Nach unterschiedlich lange Zeit erfolgenden Lagerungen im Salzsprühtest NSS werden Unterschiede zwischen den verschiedenen AA2024-Blechen insbesondere nach 24 h Lagerungszeit erkennbar. Das nicht mit PKI behandelte anodisierte AA2024-Blech TSA_Probe4 zeigt deutlich mehr weißlich-schlierige Spuren von Korrosionsprodukten als die mit PKI behandelten Bleche TSA_Probe5 und TSA_Probe6. Die PKI-Behandlung erhöht also die Korrosionsbeständigkeit der anodisierten AA2024-Bleche. Besonders ausgeprägt ist die Korrosionsbeständigkeit bei dem mit PKI behandelten Blech TSA_Probe6; hier erst treten im Auslagerungszeitraum zwischen 264 h und 432 h erste Körrosionserscheinungen auf, also mindestens elf Mal später als beim nicht mit PKI behandelten anodisierten AA2024-Blech TSA_Probe4.

**Beispiel 5**

Von zwei Blechen des Beispiels 2 blieb eines als Vergleichsbeispiel unverändert (TSA_Probe1), ein zweites wurde unter den Verfahrensbedingungen des Beispiels 3 aus einer 0,5 Gew.-% PKI + TEA-Lösung mit PKI belegt (TSA_Probe3).
Auf diese Bleche wurde eine Lackschicht aufgebracht.
Das beim Lackieren eingesetzte Lacksystem für allgemeine Industrielackierung war eine herkömmliche zweikomponentige (2K) wasserbasierende epoxidhaltige Grundierung, die in herkömmlicher Weise angemischt und verarbeitet wurde. Die Grundierung enthält keine Korrosionsinhibitoren und/oder Chromate sowie weitere Additive. Die Applikation des wasserbasierenden Lacksystem erfolgte durch ein konventionelles Sprühverfahren, wodurch das Lacksystem im Niederdruckverfahren (3 bar Eingangsdruck; Düsengröße 1,2 mm) aufgetragen wurde. Der Abstand zwischen Lackierpistole und Substrat betrug ca. 20 cm. Nach einer Ablüftzeit von 15 min wurde das Lacksystem bei 80 °C für 45 min ausgehärtet. Es wurden Lack-Trockenschichtdicken von etwa 90 $\mu$m erhalten.
Die Bleche TSA_Probe_1 und TSA_Probe_3, wurden mittels eines Filiformtests nach DIN EN 3665 beschleunigt gealtert. Dazu wurde auf der einer Seite ein Ritz eingebracht.
Nach einer Auslagerungsdauer von 1000 h werden bei der Referenzprobe TSA_Probe_1 Filiformfäden mit einer typischen Länge von ca. 1.2 mm beobachtet, wobei die maximale Länge ca. 3.1 mm beträgt. Dagegen weist TSA_Probe_3 kürzere Filiform-Fäden auf (typische Länge ca. 0.8 mm, max. Länge 2 mm), was auf eine verbesserte Beständigkeit gegenüber Filiformkorrosion im Vergleich zu einer nicht mit PKI belegten Referenzprobe hindeutet.

**Patentansprüche**

1. Verwendung eines polymeren Korrosionsinhibitors oder einer Mischung, die mindestens einen polymeren Korrosionsinhibitor enthält, der Formel

$$(R^1)_a A (R^2 X)_b$$

wobei

```
a = 0 - 3,
```

$$b = 1 - 5,$$

A eine Brückenstruktureinheit ist,

$R^1$ gleich oder verschieden H oder ein aliphatischer, aromatischer, olefinischer, cyclischer, heterocyclischer, polycyclischer oder polyheterocyclischer Rest ist,

$R^2$ gleich oder verschieden ein polymeres Grundgerüst ist, wobei das polymere Grundgerüst $R^2$ Ethoxy- (EO), Propoxy- (PO), Butoxy- (BO), -Einheiten oder Mischungen dieser Einheiten aufweist,

X gleich oder verschieden eine funktionelle Gruppe ist ausgewählt aus der Gruppe bestehend aus Amiden und Imiden von Carbonsäuren, Dicarbonsäuren und Polycarbonsäuren,

die Molmasse des Polymers zwischen 200 und 10.000, vorzugsweise 400 und 6.000 liegt;

als Korrosionsinhibitor für die Oberfläche von anodisierten Metallen ausgewählt aus der Gruppe bestehend aus Aluminium, Titan, Vanadium sowie Legierungen der vorgenannten Metalle.

2. Verwendung nach Anspruch 1 , **dadurch gekennzeichnet, dass** das polymere Grundgerüst $R^2$ ein Homopolymer von Ethoxy-Einheiten, ein Co-Polymer auf Basis einer Mischung von Ethoxy- und Propoxy-Einheiten, oder ein Homopolymer von Propoxy-Einheiten ist; und/oder dadurch, dass das Grundgerüst $R^2$ 3 bis 200, vorzugsweise 5 bis 100 Monomereinheiten umfasst.

3. Verwendung nach einem der Ansprüche 1 bis 2, **dadurch gekennzeichnet, dass** die Metalle ausgewählt sind aus der Gruppe bestehend aus anodisierten Aluminium- und Titanlegierungen, vorzugsweise anodisierten Legierungen ausgewählt aus der Gruppe bestehend aus AA 2024, AW 5005, AW 5052, AAW 5754, AW 6006, AW 6060, AW 7020, AW7075, AW7475, AW2024, Al 3.3541, Al 3.3241, Al 3.3561, Al 3.3261, TiA16V4, Ti-Zr-Nb-Legierungen wie Ti-28Zr-8Nb, NiTi-Legierungen wie SM495 und SE 508.

4. Verfahren zur Behandlung der Oberfläche von Metallen ausgewählt aus der Gruppe bestehend aus Aluminium, Titan, Vanadium sowie Legierungen der vorgenannten Metalle, mit den Schritten:

    - Anodisieren der Metalloberfläche;
    - Inkontaktbringen der anodisierten Metalloberfläche mit einem polymeren Korrosionsinhibitor oder einer Mischung, die mindestens einen polymeren Korrosionsinhibitor enthält, der Formel

    $$(R^1)_a A (R^2 X)_b$$

    wobei

    $$a = 0 - 3,$$

    $$b = 1 - 5,$$

    A eine Brückenstruktureinheit ist,

    $R^1$ gleich oder verschieden H oder ein aliphatischer, aromatischer, olefinischer, cyclischer, heterocyclischer, polycyclischer oder polyheterocyclischer Rest ist,

    $R^2$ gleich oder verschieden ein polymeres Grundgerüst ist, wobei das polymere Grundgerüst $R^2$ Ethoxy- (EO), Propoxy- (PO), Butoxy- (BO), -Einheiten oder Mischungen dieser Einheiten aufweist,

    X gleich oder verschieden eine funktionelle Gruppe ist ausgewählt aus der Gruppe bestehend aus Amiden und Imiden von Carbonsäuren, Dicarbonsäuren und Polycarbonsäuren,

    die Molmasse des Polymers zwischen 200 und 10.000, vorzugsweise 400 und 6.000 liegt.

5. Verfahren nach Anspruch 4, **dadurch gekennzeichnet, dass** das polymere Grundgerüst $R^2$ ein Homopolymer von Ethoxy-Einheiten, ein Co-Polymer auf Basis einer Mischung von Ethoxy- und Propoxy-Einheiten, oder ein Homopolymer von Propoxy-Einheiten ist; und/oder dadurch, dass das Grundgerüst $R^2$ 3 bis 200, vorzugsweise 5 bis 100 Monomereinheiten umfasst.

6. Verfahren nach einem der Ansprüche 4 bis 6, **dadurch gekennzeichnet, dass** die Metalle ausgewählt sind aus der Gruppe bestehend aus anodisierten Aluminium- und Titanlegierungen, vorzugsweise anodisierten Legierungen ausgewählt aus der Gruppe bestehend aus AA 2024, AW 5005, AW 5052, AAW 5754, AW 6006, AW 6060, AW 7020, AW7075, AW7475, AW2024, Al 3.3541, Al 3.3241, Al 3.3561, Al 3.3261, TiA16V4, Ti-Zr-Nb-Legierungen wie Ti-28Zr-8Nb, NiTi-Legierungen wie SM495 und SE 508.

7. Verfahren nach einem der Ansprüche 4 bis 6, **dadurch gekennzeichnet, dass** das Anodisieren ausgewählt ist aus der Gruppe bestehend aus Schwefelsäure-Anodisieren, Chromsäure-Anodisieren und Weinsäure-Schwefelsäure-Anodisieren.

8. Verfahren nach einem der Ansprüche 4 bis 7, **dadurch gekennzeichnet, dass** die durch Anodisieren hergestellte Schicht eine Dicke von 1 bis 3 $\mu$m aufweist.

9. Verfahren nach einem der Ansprüche 4 bis 8, **dadurch gekennzeichnet, dass** die Poren der durch Anodisieren hergestellten Schicht einen Durchmesser von 2 bis 200 nm, vorzugsweise 2 bis 50 nm, weiter vorzugsweise 5 bis 20 nm aufweisen.

10. Verfahren nach einem der Ansprüche 4 bis 9, **dadurch gekennzeichnet, dass** der polymere Korrosionsinhibitor aus einer Dispersion heraus appliziert wird, vorzugsweise einer wässrigen Dispersion.

11. Verfahren nach Anspruch 10, **dadurch gekennzeichnet, dass** ein Dispergierhilfsmittel, vorzugsweise Triethanolamin, verwendet wird.

12. Verfahren nach einem der Ansprüche 4 bis 9, **dadurch gekennzeichnet, dass** der polymere Korrosionsinhibitor aus einer Lösung heraus appliziert wird; wobei vorzugsweise als Lösungsmittel Isopropanol, Petrolether und/oder Xylol verwendet wird.

13. Metallwerkstück, erhältlich durch ein Verfahren nach einem der Ansprüche 4 bis 12.

**Claims**

1. Use of a polymeric corrosion inhibitor or of a mixture which comprises at least one polymeric corrosion inhibitor, of the formula

$$(R^1)_a A(R^2 X)_b,$$

where

$$a = 0 - 3,$$

$$b = 1 - 5,$$

A is a bridging structural unit,
$R^1$, identically or differently, is H or an aliphatic, aromatic, olefinic, cyclic, heterocyclic, polycyclic or polyheterocyclic radical,
$R^2$, identically or differently, is a polymeric framework, the polymeric framework $R^2$ having ethoxy (EO), propoxy (PO), butoxy (BO) units or mixtures of these units,
X, identically or differently, is a functional group selected from the group consisting of amides and imides of carboxylic acids, dicarboxylic acids and polycarboxylic acids,
the molar mass of the polymer is between 200 and 10 000, preferably 400 and 6000;
as corrosion inhibitor for the surface of anodized metals selected from the group consisting of aluminium, titanium, vanadium and also alloys of the aforesaid metals.

2. Use according to Claim 1, **characterized in that** the polymeric framework $R^2$ is a homopolymer of ethoxy units, a copolymer based on a mixture of ethoxy and propoxy units, or a homopolymer of propoxy units; and/or **in that** the framework $R^2$ comprises 3 to 200, preferably 5 to 100, monomer units.

3. Use according to either of Claims 1 and 2, **characterized in that** the metals are selected from the group consisting of anodized aluminium alloys and titanium alloys, preferably anodized alloys selected from the group consisting of AA 2024, AW 5005, AW 5052, AAW 5754, AW 6006, AW 6060, AW 7020, AW7075, AW7475, AW2024, Al 3.3541, A1 3.3241, Al 3.3561, Al 3.3261, TiAl6V4, Ti-Zr-Nb alloys such as Ti-28Zr-BNB, and NiTi alloys such as SM495 and SE 508.

4. Method for treating the surface of metals selected from the group consisting of aluminium, titanium, vanadium and also alloys of the aforesaid metals, comprising the steps of

- anodizing the metal surface;
- contacting the anodized metal surface with a polymeric corrosion inhibitor or with a mixture which comprises at least one polymeric corrosion inhibitor, of the formula

$$(R^1)_a A(R^2 X)_b,$$

where

$$a = 0 - 3,$$

$$b = 1 - 5,$$

A is a bridging structural unit,
$R^1$, identically or differently, is H or an aliphatic, aromatic, olefinic, cyclic, heterocyclic, polycyclic or poly-heterocyclic radical,
$R^2$, identically or differently, is a polymeric framework, the polymeric framework $R^2$ having ethoxy (EO), propoxy (PO), butoxy (BO) units or mixtures of these units,
X, identically or differently, is a functional group selected from the group consisting of amides and imides of carboxylic acids, dicarboxylic acids and polycarboxylic acids,
the molar mass of the polymer is between 200 and 10 000, preferably 400 and 6000.

5. Method according to Claim 4, **characterized in that** the polymeric framework $R^2$ is a homopolymer of ethoxy units, a copolymer based on a mixture of ethoxy and propoxy units, or a homopolymer of propoxy units; and/or **in that** the framework $R^2$ comprises 3 to 200, preferably 5 to 100, monomer units.

6. Method according to any of Claims 4 to 6, **characterized in that** the metals are selected from the group consisting of anodized aluminium alloys and titanium alloys, preferably anodized alloys selected from the group consisting of AA 2024, AW 5005, AW 5052, AAW 5754, AW 6006, AW 6060, AW 7020, AW7075, AW7475, AW2024, Al 3.3541, A1 3.3241, Al 3.3561, Al 3.3261, TiAl6V4, Ti-Zr-Nb alloys such as Ti-28Zr-8NB, and NiTi alloys such as SM495 and SE 508.

7. Method according to any of Claims 4 to 6, **characterized in that** the anodizing is selected from the group consisting of sulphuric acid anodizing, chromic acid anodizing and tartaric acid-sulphuric acid anodizing.

8. Method according to any of Claims 4 to 7, **characterized in that** the layer produced by anodizing has a thickness of 1 to 3 $\mu$m.

9. Method according to any of Claims 4 to 8, **characterized in that** the pores of the layer produced by anodizing have a diameter of 2 to 200 nm, preferably 2 to 50 nm, more preferably 5 to 20 nm.

10. Method according to any of Claims 4 to 9, **characterized in that** the polymeric corrosion inhibitor is applied from a dispersion, preferably from an aqueous dispersion.

11. Method according to Claim 10, **characterized in that** a dispersing assistant, preferably triethanolamine, is used.

12. Method according to any of Claims 4 to 9, **characterized in that** the polymeric corrosion inhibitor is applied from a solution, with preferably isopropanol, petroleum ether and/or xylene being used as solvent(s).

13. Metal workpiece obtainable by a method according to any of Claims 4 to 12.

**EP 2 900 771 B1**

**Revendications**

1. Utilisation d'un inhibiteur de corrosion polymère ou d'un mélange qui contient au moins un inhibiteur de corrosion polymère, de formule

$$(R^1)_a A(R^2 X)_b,$$

dans laquelle

$$a = 0\text{-}3,$$

$$b = 1\text{-}5,$$

A est un motif de structure pontante,
les radicaux $R^1$ sont identiques ou différents et représentent chacun H ou un résidu aliphatique, aromatique, oléfinique, cyclique, hétérocyclique, polycyclique ou polyhétérocyclique, les radicaux $R^2$ sont identiques ou différents et représentent chacun un squelette polymère de base $R^2$ comprenant des motifs éthoxy (EO), propoxy (PO), butoxy (BO) ou des mélanges de ces motifs,
les radicaux X sont identiques ou différents et représentent chacun un groupe fonctionnel choisi dans le groupe consistant en les amides et imides d'acides carboxyliques, d'acides dicarboxyliques et d'acides polycarboxyliques,
la masse moléculaire du polymère est comprise entre 200 et 10 000, de préférence entre 400 et 6 000 ;
en tant qu'inhibiteur de corrosion pour la surface de métaux anodisés, choisis dans le groupe consistant en l'aluminium, le titane, le vanadium, ainsi que les alliages des métaux mentionnés ci-dessus.

2. Utilisation selon la revendication 1, **caractérisée en ce que** le squelette polymère de base $R^2$ est un homopolymère de motifs éthoxy, un copolymère à base d'un mélange de motifs éthoxy et propoxy, ou un homopolymère de motifs propoxy ; ou en ce que le squelette de base $R^2$ comprend 3 à 200, de préférence 5 à 100 motifs monomères.

3. Utilisation selon l'une des revendications 1 à 2, **caractérisée en ce que** les métaux sont choisis dans le groupe consistant en les alliages d'aluminium et de titane anodisés, de préférence les alliages anodisés choisis dans le groupe consistant en les alliages AA 2024, AW 5005, AW 5052, AAW 5754, AW 6006, AW 6060, AW 7020, AW7075, AW7475, AW2024, Al 3.3541, Al 3.3241, Al 3.3561, Al 3.3261, TiAl6V4, Ti-Zr-Nb, ainsi que les alliages Ti-28Zr-BNb, NiTi, ainsi que SM495 et SE508.

4. Procédé pour le traitement de la surface des métaux choisis dans le groupe consistant en l'aluminium, le titane, le vanadium, ainsi que les alliages des métaux mentionnés ci-dessus, comportant les étapes suivantes :

- anodisation de la surface métallique ;
- mise en contact de la surface métallique anodisée avec un inhibiteur de corrosion polymère ou un mélange qui contient au moins un inhibiteur de corrosion polymère, ayant la formule

$$(R^1)_a A(R^2 X)_b,$$

dans laquelle

$$a = 0\text{-}3,$$

$$b = 1\text{-}5,$$

A est un motif de structure pontante,
les radicaux $R^1$ sont identiques ou différents et représentent chacun H ou un résidu aliphatique, aromatique, oléfinique, cyclique, hétérocyclique, polycyclique ou polyhétérocyclique, les radicaux $R^2$ sont identiques ou différents et représentent chacun un squelette polymère de base $R^2$ comprenant des motifs éthoxy (EO), propoxy (PO), butoxy (BO) ou des mélanges de ces motifs,
les radicaux X sont identiques ou différents et représentent chacun un groupe fonctionnel choisi dans le

12

groupe consistant en les amides et imides d'acides carboxyliques, d'acides dicarboxyliques et d'acides polycarboxyliques,

la masse moléculaire du polymère est comprise entre 200 et 10 000, de préférence entre 400 et 6 000.

**5.** Procédé selon la revendication 4, **caractérisé en ce que** le squelette polymère de base R² est un homopolymère de motifs éthoxy, un copolymère à base d'un mélange de motifs éthoxy et propoxy, ou un homopolymère de motifs propoxy ; ou **en ce que** le squelette de base R² comprend 3 à 200, de préférence 5 à 100 motifs monomères.

**6.** Procédé selon l'une des revendications 4 à 6, **caractérisé en ce que** les métaux sont choisis dans le groupe consistant en les alliages d'aluminium et de titane anodisés, de préférence les alliages anodisés choisis dans le groupe consistant en les alliages AA 2024, AW 5005, AW 5052, AAW 5754, AW 6006, AW 6060, AW 7020, AW7075, AW7475, AW2024, Al 3.3541, Al 3.3241, Al 3.3561, Al 3.3261, TiAl6V4, Ti-Zr-Nb, ainsi que les alliages Ti-28Zr-8Nb, NiTi, ainsi que SM495 et SE508.

**7.** Procédé selon l'une des revendications 4 à 6, **caractérisé en ce que** l'anodisation est choisie dans le groupe consistant en l'anodisation à l'acide sulfurique, l'anodisation à l'acide chromique et l'anodisation à l'acide tartrique-acide sulfurique.

**8.** Procédé selon l'une des revendications 4 à 7, **caractérisé en ce que** la couche fabriquée par anodisation présente une épaisseur de 1 à 3 μm.

**9.** Procédé selon l'une des revendications 4 à 8, **caractérisé en ce que** les pores de la couche fabriquée par anodisation présentent un diamètre de 2 à 200 nm, de préférence de 2 à 50 nm, d'une manière plus préférée de 5 à 20 nm.

**10.** Procédé selon l'une des revendications 4 à 9, **caractérisé en ce que** l'inhibiteur de corrosion polymère est appliqué à partir d'une dispersion, de préférence d'une dispersion aqueuse.

**11.** Procédé selon la revendication 10, **caractérisé en ce qu'**on utilise un auxiliaire de dispersion, de préférence de la triéthanolamine.

**12.** Procédé selon l'une des revendications 4 à 9, **caractérisé en ce que** l'inhibiteur de corrosion polymère est appliqué à partir d'une solution, auquel cas on utilise de préférence en tant que solvant l'isopropanol, l'éther de pétrole et/ou le xylène.

**13.** Pièce en oeuvre métallique pouvant être obtenue par un procédé selon l'une des revendications 4 à 12.

Fig. 1

Fig. 2

**IN DER BESCHREIBUNG AUFGEFÜHRTE DOKUMENTE**

**In der Beschreibung aufgeführte Patentdokumente**

- FR 75182 E

- BE 807939 A1